# EUROPEAN PATENT SPECIFICATION

(11) **EP 3 891 884 B1**
(45) Date of publication and mention of the grant of the patent: **24.08.2022**
(21) Application number: 19808674.6
(22) Date of filing: 03.12.2019
(51) Int. Cl.: H02S 10/30, H02S 20/24, H02S 10/10, H02S 40/42

(54) **APPARATUS FOR SUPPORTING AND COOLING A PHOTOVOLTAIC PANEL**
VORRICHTUNG ZUM STÜTZEN UND KÜHLEN EINES FOTOVOLTAIKMODULS
APPAREIL DE SUPPORT ET DE REFROIDISSEMENT D'UN PANNEAU PHOTOVOLTAÏQUE

(30) Priority: 05.12.2018 IT 201800010839
(43) Date of publication of application: 13.10.2021
(73) Proprietor: Alma Mater Studiorum Universita di Bologna, 40126 Bologna (IT)
(72) Inventor: FABBRI, Giampietro, 40135 Bologna (IT); GREPPI, Matteo, 47121 Forli' (IT)
(74) Representative: Conti, Marco
(86) International application number: PCT/IB2019/060393
(87) International publication number: WO 2020/115651

(56) References cited:
- WO-A1-00/05769
- WO-A1-2018/148796
- CN-A- 101 673 780
- CN-A- 102 130 106
- CN-A- 102 244 487
- CN-A- 108 599 622
- JP-A- H0 951 115
- JP-A- 2010 258 031
- KR-A- 20170 022 631
- US-A- 5 837 929
- US-A1- 2009 205 694

## Description

### Technical field

This invention relates to an apparatus for supporting and cooling a photovoltaic panel, a method for making an apparatus for supporting and cooling a photovoltaic panel and a method for installing a supporting and cooling apparatus on a photovoltaic panel.

### Background art

It is known that photovoltaic cells, when exposed to high levels of solar radiation for a considerable time, may reach very high temperatures, which lead to a reduction in production efficiency and, alternated with the low temperatures to which the cells are subjected during periods without radiation, cause rapid degradation of those same cells. Therefore, systems for cooling photovoltaic cells are necessary, which remove heat from the cells during periods of high levels of solar radiation.

In the photovoltaic cell cooling sector, thermoelectric cooling systems are known, which use the thermoelectric properties of semiconductor materials. Indeed, an electric current which flows through an electrical conductor produces a heat transfer; this phenomenon is known as the "Peltier effect". The opposite phenomenon, known as the "Seebeck effect" is also known, according to which electrical conductor and semiconductor materials, if subjected to a temperature gradient between respective ends, have a difference in electric potential at the ends, and the difference in potential generates an electric current.

The use of Peltier cells for cooling the photovoltaic cells of a solar panel is known from patent documents US2016/0268967A1, DE102008009979A1 and US2011/0155214A1. A common Peltier cell is formed by a plurality of pairs of semiconductor materials; the semiconductor materials are connected to each other, on an upper face and on a lower face, by respective thin copper plates, to form an electric circuit.

Patent document US2011/0155214A1 describes a system for cooling a photovoltaic panel comprising a plurality of Peltier cells having a first face in contact with the photovoltaic cells and a second face in contact with a heat exchanger (in this case, having fins), which exchanges heat with a fluid.

The system requires the electrical connections to be made using cable. Moreover, since it consists of a first layer of Peltier cells and a second layer of cooling fins, it involves high costs, weights and dimensions.

A similar system to that of patent document US2011/0155214A1, with similar limits and disadvantages, is referred to in the scientific article "Techniques for enhancing and maintaining electrical efficiency of photovoltaic systems" by authors Yesilyurt, Nasiri and Ozakin (IJNTR April 2018, page 50).

Patent document DE102008009979A1 describes a solar collector configured to be brushed against by an airflow which flows in a channel below the collector, to cool it. Patent document CN101673780A, describes an apparatus comprising a solar panel and a thermoelectric device integrated together, as known in the prior art.

This system uses thermoelectric phenomena to generate an electric current. It is of limited efficiency since the temperature difference between the opposite surfaces of the Peltier cells is small due to the low conductive resistance of the cells themselves (through which the heat removed passes) compared with the high convective resistance between cold surface and coolant. Moreover, air, being a gas, has a limited heat transfer coefficient, which limits the efficiency of removing heat from the collector and must be circulated by means of a fan, which absorbs a sizeable portion of the electric power produced by the collector, further reducing the efficiency of the system.

Patent document US2016/0268967A1 provides a system for cooling a photovoltaic panel comprising a plurality of thermocouples having a first face in contact with the photovoltaic cells and a second face in contact which keeps the second face at a low temperature. The thermocouples are interconnected in series by means of suitable electrical connections.

The main disadvantage of this system is the fact that the heat removed from the photovoltaic cells passes entirely through the thermocouples. That results in either a reduction in heat exchange efficiency (if the design has a high fall in temperature in the thermocouples) or a reduction in the Seebeck effect (if the design has a low fall in temperature in the thermocouples). Moreover, the system is complex to make and install: indeed, it is necessary to make, one at a time, the electrical connections via cable between the Peltier cells; moreover, it is necessary to make a complex system of exchangers, in order to keep the second face of the cells at a low temperature. The complexity of the system, including both the Peltier cells and the heat exchanger, also results in high costs, as well as considerable weight and large dimensions of the structure.

### Disclosure of the invention

The subject matter of the present invention is defined in independent claims 1, 12 and 15.

The aim of this invention is to provide an apparatus for supporting and cooling a photovoltaic panel, a method for making an apparatus for supporting and cooling a photovoltaic panel and a method for installing a supporting and cooling apparatus on a photovoltaic panel, which overcome the above-mentioned disadvantages of the prior art.

That aim is fulfilled by the apparatus for supporting and cooling a photovoltaic panel, by the method for making it and by the method for installing it on a photovoltaic panel, according to this invention, which are characterized as described in the claims below.

In particular, this description provides an apparatus for supporting and cooling a photovoltaic panel. The apparatus includes a chiller, for cooling the photovoltaic panel. The apparatus also includes a thermoelectric generator. In the apparatus, the thermoelectric generator is integrated with the chiller.

In short, the main innovative aspects linked to this apparatus relate to the integration between the heat exchanger and the thermoelectric generator, the independence between heat exchange efficiency and thermoelectric generation efficiency, because only part of the heat removed from the panel passes through the thermocouples, and the use of a system of slotting joints to make the electrical contacts, with consequent reduction of the number of screws and of the system dimensions, as well as simplification of the making and installation of the apparatus.

In one embodiment, the apparatus comprises a baseplate. The baseplate is configured to be mounted on a roof or on the ground. The baseplate is preferably flat.

In one embodiment, the apparatus comprises a top plate. The top plate is configured to support the photovoltaic panel. The photovoltaic panel is operatively rested on the top plate. The photovoltaic panel is fastened to the top plate. The top plate is preferably flat. The top plate is configured to receive the photovoltaic panel which is mounted on the top plate.

The photovoltaic panel comprises one or more photovoltaic cells. The photovoltaic panel is adapted to generate (by means of the photovoltaic cells) a primary electric current.

The apparatus comprises a structure. In one embodiment, the structure is configured to generate a supplementary electric current by Seebeck effect. The supplementary electric current is a direct current.

The structure is interposed between the baseplate and the top plate. The structure is configured to exchange heat with the photovoltaic panel through the top plate. Therefore, the structure is in heat exchange conditions with the top plate.

The structure defines a thermocouple; that is to say, the structure includes a thermocouple. In one (preferred) embodiment, the structure defines a plurality of thermocouples.

The structure includes a first element (or first cooling element). The first element is made of a first material. The first material is electrically conductive. The first material has a first value of Seebeck coefficient.

The structure includes a second element (or second cooling element). The second element is made of a second material. The second material is electrically conductive. The second material has a second value of Seebeck coefficient. The second value is different from the first value. The second material is different from the first material.

The first element and the second element are electrically connected. In particular, the first element and the second element are electrically connected to form the thermocouple. The first element and the second element are connected in order to allow the supplementary electric current to flow therethrough. Therefore, the voltages produced by the first element and the second element are algebraically added together.

In one (preferred) embodiment, the structure comprises a plurality of first elements and a plurality of second elements, connected in series, to form a series of elements. Each element (first or second) forms one thermocouple with the element (first or second) before it and another thermocouple with the element (first or second) after it in the series of elements. Therefore, each thermocouple is formed by one of the (first or second) elements and by a further element of the (first or second) elements.

The voltages produced by the first element and by the second element are algebraically subtracted (since the current flows through them in opposite directions). Preferably, the first value of Seebeck coefficient of the first material is positive and the second value of Seebeck coefficient of the second material is negative (or positive and much lower than the value of the first Seebeck coefficient), or vice versa; in this way, the total voltage, given by the algebraic sum (or by the subtraction) of the voltages produced by the first element and by the second element, will be given by the total of the absolute values of the voltages produced by the first element and by the second element.

Therefore, the apparatus allows cooling of the photovoltaic panel and, at the same time, production of a supplementary electric current, which increases the efficiency of conversion of the solar energy into electricity by the system. Indeed, the Seebeck effect occurs inside the same heat exchanger which acts as a support and cooling unit for the photovoltaic cells.

In one embodiment, the first element and the second element include surfaces that delimit a channel for the passage of a cooling fluid. The cooling fluid, as it passes through the channel, brushes against the first element and the second element, cooling them. Therefore, the structure constitutes a heat exchanger configured to dissipate heat extracted from the photovoltaic panel.

Therefore, the first element and the second element are configured to remove heat from top plate (by conduction) and to dissipate it (by convection) through the channel, in which the cooling fluid which brushes against the first element and the second element passes.

The first and the second element each have a hot portion, in heat exchange conditions with the top plate, and a cold portion. The temperature gradient between the hot portion and the cold portion is maintained by the passage of the cooling fluid in the channel. Thanks to the temperature gradient, the first element and the second element connected to each other to form a thermocouple generate the supplementary electric current, by Seebeck effect.

In one embodiment, the first element and the second element are in heat exchange conditions with the baseplate. In particular, the first element and the second element each have a cold portion in heat exchange conditions with the baseplate. In this way, the temperature gradient between the hot portion (in heat exchange with the top plate) and the cold portion is maintained by a synergic effect of conduction towards the baseplate and convection towards the fluid which flows in the channel.

In one embodiment, the first element and the second element are in contact (direct or indirect) with the baseplate.

In one embodiment, the first element and the second element each include a base. In one embodiment, the first element and the second element each include a fin. In one embodiment, the first element and the second element each include a top. The fin is elongated between the base and the top.

In one embodiment, the first element and the second element each have the base in contact (direct or indirect) with the baseplate and/or the top in contact (direct or indirect) with the top plate.

In one embodiment, the first element has the base in contact (direct or indirect) with the baseplate. In one embodiment, the second element has the top in contact (direct or indirect) with the top plate.

In one embodiment, the second element has the base in contact (direct or indirect) with the baseplate. In one embodiment, the first element has the top in contact (direct or indirect) with the top plate.

In one embodiment, the distance between the base and the top of each first and second element is at least 20 times greater than a thickness of the respective fin. In one embodiment, the distance between the base and the top of each first and second element is at least 15 (or 10) times greater than a thickness of the respective fin. In one embodiment, the distance between the base and the top of each first and second element is at least 25 (or 30) times greater than a thickness of the respective fin. In this way, the fin is thin enough to have a large surface area for heat exchange with the fluid which passes in the channel, in order to guarantee good heat dispersion. Moreover, the distance between the base and the top is long enough to have a high thermal gradient between the base and the top, useful for the Seebeck effect.

In one embodiment, the base of the first element is connected to the base of the second element. In one embodiment, the top of the first element is electrically isolated from the top of the second element. Therefore, the first element and the second element are electrically connected in series by means of the respective bases.

In one embodiment, the top of the first element is connected to the top of the second element. In one embodiment, the base of the first element is electrically isolated from the base of the second element. Therefore, the first element and the second element are electrically connected in series by means of the respective tops.

The supplementary electric current flows from the first element to the second element or vice versa. The electric current passes through the first element in a first direction (from the base to the top, or vice versa) and the second element in a second direction, opposite to the first direction.

In one embodiment, the fin of the first element is spaced from the fin of the second element. In one embodiment, the channel for the passage of the cooling fluid is partly delimited by a first surface of the fin of the first element, the first surface facing towards the fin of the second element, and by a second surface of the fin of the second element, the second surface facing towards the fin of the first element.

Therefore, the cooling fluid passing in the channel brushes against respective surfaces of respective fins of the first element and of the second element.

In one embodiment, the apparatus comprises a plurality of first elements and a plurality of second elements (that is that is to say, a plurality of thermocouples). The first elements and second elements (that is to say, the thermocouples) are disposed in succession in a row.

In the row, the first elements of the plurality of first elements are alternated with the second elements of the plurality of second elements. In this way, each first element is adjacent to the respective second element before it and to the respective second element after it. Therefore, the apparatus comprises a plurality of thermocouples, each formed by a respective first element and a respective second element.

In one embodiment, on each first element of the plurality of first elements, the top is connected to the top of the second element before it and the base is connected to the base of the second element after it. Therefore, preferably, the thermocouples are connected to each other in series; in this way, the voltages produced by the thermocouples are added together; and a single supplementary current flows through all of the thermocouples in the row. In particular, the supplementary current flows through the first elements of all of the thermocouples in a first direction (from the base to the top, or vice versa) and all of the second elements of the thermocouples in a second direction, opposite to the first direction.

In one embodiment, the apparatus comprises a plurality of channels. In one embodiment, each channel is delimited by a respective first element and by a respective second element, which are adjacent to each other in the row. Preferably, the channels for cooling the elements of the row are connected to each other in parallel.

In one embodiment, the first elements and second elements of the respective pluralities are disposed in a plurality of rows. In one preferred embodiment, the rows are electrically connected to each other in series. In one embodiment, the rows are electrically connected to each other in parallel.

Preferably, the rows are alongside each other and the channels for the passage of the cooling fluid of the different rows are connected to each other in series (the connection being understood to be a fluid connection here). In this way, there is a plurality of channels, each for brushing against a respective thermocouple of each row.

Therefore, the apparatus is made according to a modular structure (composed of a plurality of rows, each comprising a plurality of thermocouples), which can easily be adapted to different dimensions of the photovoltaic panel.

The heat removed from the photovoltaic cells is mostly carried away by convection, through the upper part of the channel, whilst, a smaller portion of the heat removed passes through the fins and reaches the lower part of the self-same channel. That guarantees heat exchange efficiency, even if the fins have poor thermal conductivity. Actually, the fact that the fins are not very thermally conductive contributes to causing a large temperature difference (for example at least 8°C, or preferably at least 10°C) in the thermocouples (with strong Seebeck effect), without noticeably reducing the heat exchange efficiency.

In one embodiment, the first and the second material therefore have enough thermal conductivity to remove heat from the top plate, but their thermal conductivity is not too high, so that a temperature gradient can be created in each element. In particular, the thermal conductivity of the element is greater than the thermal conductivity of the cooling fluid which flows in the channel. In one embodiment, the first material and the second material have a thermal conductivity of between 0.1 and 0.8 W/(mK).

In one embodiment, the first material includes (or is made of) a first polymer. In one embodiment, the first material includes (or is made of) a second polymer. The first and the second polymer are electrically conductive polymers. The first polymer is different from the first polymer. Polymers have the advantage, compared with other materials, for example metal materials, of being safe and not harmful and/or toxic.

For example, the first material and/or the second material may include one or more of the following polymers: PEDOT:PSS or Poly(3,4-ethylenedioxythiophene) (also known as PH1000), which is processable in water by using the oxidizing agent PSS (polystyrene sulfonate) and has high electrical conductivity, low density, good ambient stability and easy synthesis; polyaniline (PANI); polypyrrole (PPY) and its derivatives.

In one embodiment, the cooling fluid is a gas (or a mixture of gases). For example, the cooling fluid may be air.

In one embodiment, the cooling fluid is a liquid. For example, the cooling fluid may be water.

In one embodiment, the cooling fluid is not electrically conductive (for example air). In one embodiment, the cooling fluid is electrically conductive; in this case, the elements are coated with an electrically insulating paint.

In one embodiment, the apparatus comprises a circulator. The circulator is configured to force the cooling fluid to circulate in the channel (or in the channels). In one embodiment, in which the cooling fluid is gaseous, the circulator is a fan. In one embodiment, in which the cooling fluid is gaseous, the circulator is a pump.

In one embodiment, the apparatus is configured to provide natural circulation of the cooling fluid in the channel (or in the channels).

The apparatus according to this description, as well as being useful for cooling the solar panel and increasing its efficiency, also has the advantage, when mounted on a roof, of acting as thermal insulation for the roof; this advantage is particularly evident in winter.

This description also provides a photovoltaic plant comprising a photovoltaic panel and an apparatus for supporting and cooling the photovoltaic panel according to one or more of the aspects of this description. In particular, the plant may comprise a plurality of panels and a respective plurality of supporting and cooling apparatuses, wherein each panel is mounted on a respective apparatus, or a plurality of panels are mounted on the same supporting and cooling apparatus.

This description also provides a method for making an apparatus for supporting and cooling a photovoltaic panel.

In one embodiment, the method comprises a step of providing a baseplate.

In one embodiment, the method comprises a step of providing a top plate. In one embodiment, the method comprises a step of providing a first element, made of a first material. The first material is electrically conductive and has a first value of Seebeck coefficient.

In one embodiment, the method comprises a step of providing a second element, made of a second material. The second material is electrically conductive and has a second value of Seebeck coefficient, different from the first value.

In one embodiment, the method comprises a step of housing the first element and the second element between the baseplate and the top plate. In one embodiment, the method comprises a step of electrically connecting the first element to the second element. In this way, the supplementary electric current can flow therethrough. In one embodiment, the step of housing and the step of electrically connecting coincide. Indeed, in the step of housing, the first element and the second element are placed so as to allow the electric current to flow therethrough.

In one embodiment, the first element and the second element include surfaces that, in the step of housing, are placed apart from one another to delimit a channel for the passage of a cooling fluid. Therefore, the structure constitutes a heat exchanger configured to extract heat from the photovoltaic panel and to dissipate it.

In one embodiment, the first element and the second element each include a base, a top and a fin, elongated between the base and the top. In one embodiment, the step of housing comprises a sub-step of fastening the baseplate to a frame.

In one embodiment, the step of housing comprises a sub-step of resting the base of the first element in contact with the (or on the) baseplate.

In one embodiment, the step of housing comprises a sub-step of slotting the base of the second element into the base of the first element. In one embodiment, the base of the first element has a cavity into which a wedge (that is to say, a projection) of the base of the second element is inserted. In one embodiment, the base of the first element has a wedge (that is to say, a projection) which is inserted into a cavity of the base of the second element. The slotting constitutes an electrical connection between the elements. Preferably, the slotting is performed using pressure.

In one embodiment, the step of housing comprises a sub-step of slotting the top of the second element into the top of the first element. In one embodiment, the top of the first element has a cavity into which a wedge (that is to say, a projection) of the top of the second element is inserted. In one embodiment, the top of the first element has a wedge (that is to say, a projection) which is inserted into a cavity of the top of the second element. In one embodiment, the steps of slotting occur simultaneously. In one embodiment, the steps of slotting comprise moving the second element (or the second elements) along a vertical direction, from the top downward. Vertical direction means a direction perpendicular to the baseplate (and to the top plate).

In one embodiment, the steps of resting and slotting are repeated for a plurality of first elements and a plurality of second elements. In one embodiment, the first elements of the plurality of first elements and the second elements of the plurality of second elements are placed in a row, preferably alternating. Preferably, each first element is connected to the second element after it by means of (slotting) connection of the respective tops and to the second element before it by means of (slotting) connection of the respective bases, or vice versa.

In one embodiment, the step of housing comprises a sub-step of resting the top plate in contact with the top of the second element (or of the second elements of the plurality of second elements).

In one embodiment, the step of housing comprises a sub-step of fastening the top plate to the frame.

Preferably, the sub-steps of fastening the baseplate to the frame, resting the first element (or the first elements) on the baseplate, slotting the base of the second element into the base of the first element are performed in succession. The sub-step of slotting the base of the second element into the base of the first element and the sub-step of slotting the top of the second element into the top of the first element may be simultaneous or consecutive. Preferably, the sub-steps of slotting the top of the second element into the top of the first element, resting the top plate in contact with the top of the second element, fastening the top plate to the frame are performed in succession.

In one embodiment, the step of housing comprises a sub-step of fastening the baseplate to a frame.

In one embodiment, the step of housing comprises a sub-step of resting the base of the first element in contact with the baseplate. In one embodiment, the step of housing comprises a sub-step of resting the base of the second element in contact with the baseplate.

In one embodiment, the step of housing comprises a sub-step of slotting the base of the first element into the base of the second element. Preferably, the step of slotting comprises moving the second element (and/or the first element) in a direction parallel to the baseplate. In one embodiment, the direction parallel to the baseplate is a longitudinal direction. In one embodiment, the direction parallel to the baseplate is a transversal direction. Preferably, the slotting is performed using pressure. In one embodiment, the step of slotting includes inserting a wedge of the base of the first element into a cavity of the base of the second element, or vice versa. In one embodiment, the step of slotting includes inserting a wedge of the top of the first element into a cavity of the top of the second element, or vice versa.

In one embodiment, the step of housing comprises a sub-step of interposing an electrical insulating material between the top of the first element and the top of the second element.

In one embodiment, the step of housing comprises a step of slotting the top of the first element into the top of the second element and a step of interposing an electrical insulating material between the base of the first element and the base of the second element. The step of slotting effectively constitutes an electrical connection between the elements. Preferably, a plurality of first elements and a plurality of second elements are inserted, in succession, along a row, and each first element is connected to the second element after it by means of (slotting) connection of the respective tops and to the second element before it by means of (slotting) connection of the respective bases (or vice versa); moreover, an insulating material is inserted between the base of the first element and the base of the second element after it and a further insulating material between the top of the first element and the top of the second element before it (or vice versa).

In one embodiment, the method comprises a step of resting the top plate in contact with the top of the first element and with the top of the second element.

The method for making the apparatus described above, in respective embodiments, is particularly easy and fast. Indeed, the electrical connection between the elements is actually made by means of slotting connection. Therefore, no further electrical connections via cable between the elements are necessary.

The method described above for making a supporting and cooling apparatus may be part of a method (also forming the subject matter of this description) for making a photovoltaic plant including the supporting and cooling apparatus and a photovoltaic panel.

This description also provides a method for installing a supporting and cooling apparatus on an existing photovoltaic panel. The method comprises a step of providing a supporting and cooling apparatus according to one or more aspects of this description. In one embodiment, the method comprises a step of mounting and connecting the baseplate on a roof or on the ground. In one embodiment, the method comprises a step of mounting and connecting the photovoltaic panel on the top plate.

### Brief description of drawings

This and other characteristics will become more apparent from the following description of a preferred embodiment, illustrated by way of example only and without limiting the scope of the invention in the appended drawings, in which:

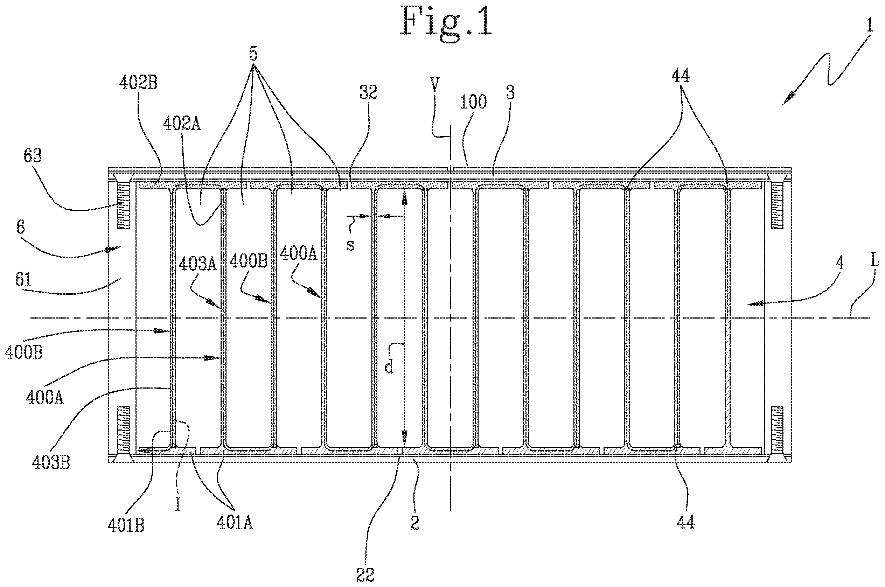

Figure 1 is a vertical section of a possible embodiment of a structure for supporting and cooling a photovoltaic panel according to this description;

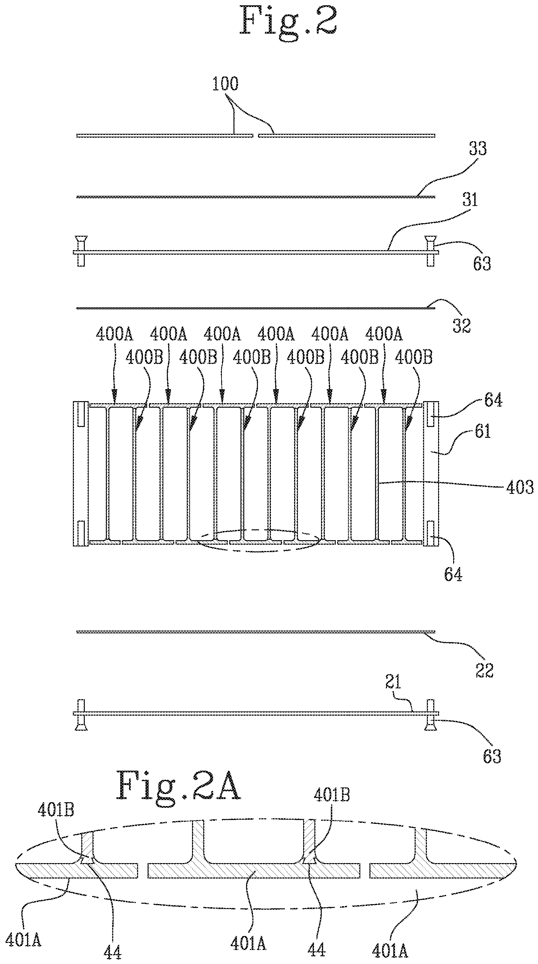

Figure 2 is an exploded view of the structure of Figure 1;
Figure 2A shows an enlarged detail of Figure 2;

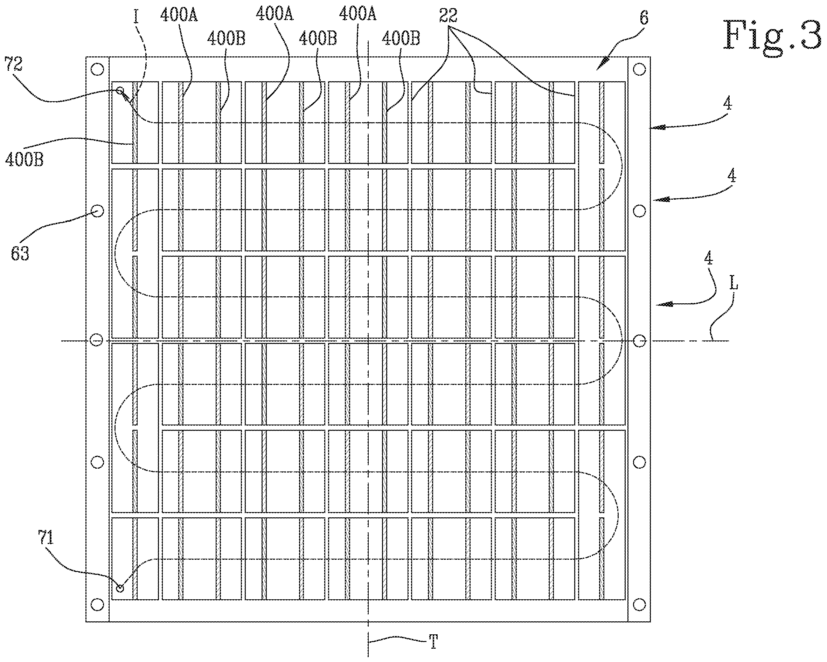

Figure 3 is a longitudinal section of the structure of Figure 1 ;

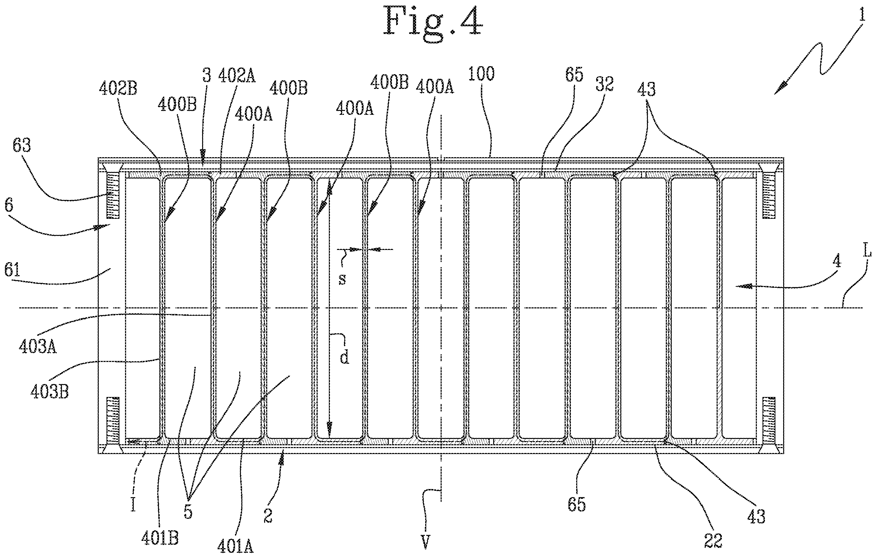

Figure 4 is a vertical section of a variant of the structure of Figure 1;

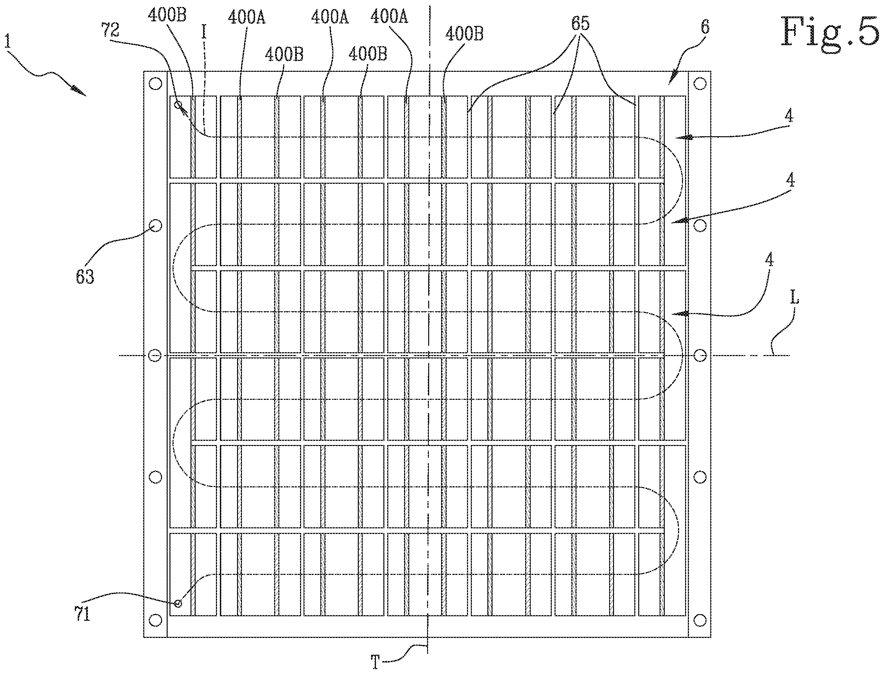

Figure 5 is a longitudinal section of the structure of Figure 4;

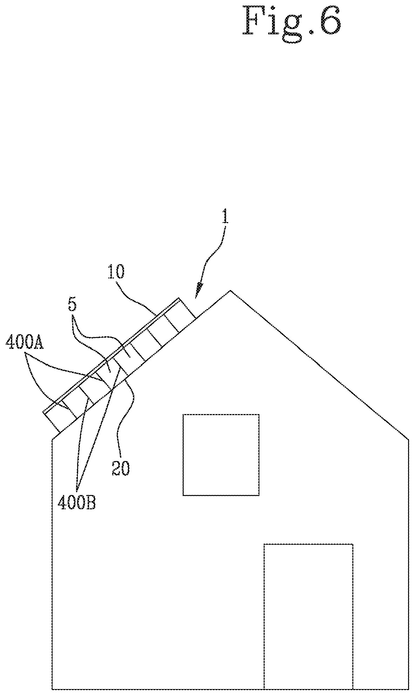

Figure 6 shows a plant comprising the structure of Figure 1 or Figure 4 installed on a roof.

### Detailed description of preferred embodiments of the invention

With reference to the accompanying figures, the numeral 1 denotes an apparatus for supporting and cooling a photovoltaic panel 10.

The photovoltaic panel 10 comprises a plurality of photovoltaic cells 100.

The apparatus 1 comprises a baseplate 2. La baseplate 2 includes a base sheet 21. In one embodiment, the base sheet 21 is made of aluminium. The baseplate 2 includes an electrically insulating base layer 22, applied to an upper face of the base sheet 21. The insulating base layer 22 is thermally conductive and electrically insulating. In one embodiment, the insulating base layer 22 is made of an elastic material. In this way, the baseplate 2 can disperse heat (so as to cool the structure resting on it) but not conduct electricity. In one embodiment, the insulating base layer 22 is made of a material comprising (or based on) silicone.

The lower face of the base sheet 21, opposite to the upper face, is configured to be mounted on a roof 20 or on the ground.

The apparatus 1 comprises a top plate 3. La top plate 3 includes a top sheet 31. In one embodiment, the top sheet 31 is made of aluminium. The top plate 3 includes an electrically insulating top layer 32, applied to a lower face of the top sheet 32. The insulating top layer 32 is thermally conductive and electrically insulating. In one embodiment, the insulating top layer 32 is made of an elastic polymeric material. In this way, the top plate 3 can disperse heat (so as to cool the photovoltaic cells) but not conduct electricity. In one embodiment, the insulating top layer 32 is made of a material based on (or including) silicone. The top plate 3 includes a thermally conductive glue 33, applied to the upper face of the top plate 3, opposite to the lower face. In one embodiment, the thermally conductive glue 33 is electrically insulating. The thermally conductive glue 33 is configured to receive resting on it the photovoltaic cells 10 and to stably fasten them to the top sheet 31.

In one embodiment, the baseplate 2 and the top plate 3 extend in respective planes parallel to each other; said planes are parallel to a longitudinal direction L and to a transversal direction T.

The apparatus 1 comprises a structure (also known as the supporting and cooling structure) interposed between the baseplate 2 and the top plate 3. The structure comprises a frame 6. In one embodiment, the frame 6 includes a pair of lateral uprights 61. The lateral uprights 61 are fastened to the baseplate 2 and to the top plate 3. The lateral uprights 61 are fastened on respective opposite sides of the baseplate 2 and of the top plate 3. In one embodiment, the baseplate 2 and the top plate 3 are rectangular (or square) in shape, that is to say, they have four sides, made up of two opposite pairs. The lateral uprights 61 of the frame are fastened on one pair of opposite sides (preferably the sides elongate parallel to the fins 403A, 403B); cooling fluid input and output connectors are defined on the other pair.

Each lateral upright 61 is fastened at a first end to the baseplate 2 and at a second end, opposite the first end, to the top plate 3.

The lateral uprights 61 are fastened to the baseplate 2 and to the top plate 3 by means of a plurality of screws 63. In one embodiment, the baseplate 2 and the top plate 3 include a plurality of screws 63. In one embodiment, defined in the lateral uprights 61 there is a plurality of cavities or internal threads 64, configured to receive the screws 63.

In one embodiment, the lateral uprights 61 are elongate parallel to a vertical direction V.

In one embodiment, la structure comprises a first element 400A and a second element 400B.

In one embodiment, the structure comprises a plurality of first elements 400A and a plurality of second elements 400B, disposed in succession in one or more rows 4. Each pair made up of one first element 400A and one second element 400B forms a thermocouple. In one embodiment, the structure comprises a plurality of rows 4, electrically interconnected in series.

In one embodiment, the number of rows 4 is equal to the number of thermocouples for each row 4. For example, in one embodiment, the structure comprises 6 rows each having 6 thermocouples; in another embodiment, the structure comprises 50 rows each having 50 thermocouples.

The first elements 400A are made of an electrically conductive first material having a first value of Seebeck coefficient. The second elements 400B are made of an electrically conductive second material having a second value, different from the first value, for the Seebeck coefficient.

In each row 4, there is an end first element and an end second element and a plurality of elements 400A, 400B disposed in sequence between the end first element and the end second element, so that each of them is adjacent to the respective element before it and to the respective element after it.

In each 4, the first elements 400A are alternated with the second elements 400B, so that for each first element 400A (not the end one) the respective element before it and the respective element after it are second elements 400B, and vice versa.

Each first element 400A of the plurality of first elements 400A includes a base 401A, a top 402A and a fin 403A elongated between the base 401A and the top 402A.

Each second element 400B of the plurality of second elements 400B includes a base 401A, a top 402A and a fin 403A elongated between the base 401A and the top 402A.

Each first element 400A has the base 401A connected to the base 401B of the second element 400B after it and has the top 402A connected to the top 402B of the second element 400B before it.

Each second element 400B has the base 401B connected to the base 401A of the first element 400A before it and has the top 402B connected to the top 402A of the second element 400A after it.

Preferably, the connections are made by means of slotting using pressure. In particular, each first element 400A includes, at the top 402A, a wedge and each second element 400B includes, at the top 402B, a cavity, configured to accommodate and lock the wedge of the top 402A. Moreover, each first element 400A includes, at the base 401A, a cavity and each second element 400B includes, at the base 401B, a wedge, configured to be inserted into the cavity of the base 401A.

In one embodiment, the wedges of the bases 401B and of the tops 401A project from the same bases 401B and tops 401A in the longitudinal direction L. In this embodiment, the first and second elements 400A and 400B are connected by means of a system of longitudinal slotting joints 43.

In one embodiment, the wedges of the bases 401B and of the tops 401A project from the same bases 401B and tops 401A in the vertical direction V. In this embodiment, the first and second elements 400A and 400B are connected by means of a system of vertical slotting joints 44.

In one embodiment, each first element 400A has the base 401A connected to the base 401B of the second element 400B after it and has the top 402A connected to the top 402B of the second element 400B before it by means of a system of vertical slotting joints 44.

Each first element 400A has the base 401A electrically isolated from the base 401B of the second element 400B before it and has the top 402A electrically isolated from the top 402B of the second element 400B after it. Each second element 400B has the base 401B isolated from the base 401A of the first element 400A after it and has the top 402B isolated from the top 402A of the second element 400A before it.

The bases 401 A, 401B and the tops 402A, 402B can be isolated from each other by means of a distance (for example, a few millimetres) or by means of an inter-element insulating material 65.

In this way, the structure forms an electric circuit for the passage of a supplementary current I. The supplementary electric current I can flow through each row 4; in particular, the supplementary electric current I flows through the first elements 400A and the second elements 400B of each row 4, in the order given by the succession in the row 4, from the end first element to the end second element or vice versa. The electric current I flows through the first elements 400A in a first direction, from the base 401A to the top 402A (or vice versa) and flows through the second elements 400B in a second direction, from the top 402B to the base 401A (or vice versa).

In one embodiment, the structure comprises an input terminal 71 and an output terminal 72. In one embodiment, the end second element of each row 4 is connected to the end first element of the row 4 after it. In this way, the supplementary electric current I flows through all of the rows 4 in sequence and exits the structure by means of the output terminal 72. In particular, the supplementary electric current I flows through a first row 4 in a first direction, a second row (having the end first element connected to the end second element of the first row) in a second direction opposite to the first, a third row in the first direction, and so on.

The second elements 400B have the top 402B in contact with the top plate 3 (more specifically, with the electrically insulating layer 32), in order to remove heat from top plate 3.

In one embodiment, both the first elements 400A and the second elements 400B have the top 401A, 401B in contact with the top plate 3.

The first elements 400A have the base 401A in contact with the baseplate 2, in order to release heat to the baseplate 2 (more specifically, with the electrically insulating layer 22). In one embodiment, both the first elements 400A and the second elements 400B have the base 402A, 402B in contact with the baseplate 2.

The fin 403A, 403B of each first element 400A and of each second element 400B arranged in each row 4 has a first face and a second face, opposite to the first face. The first and second faces are at rights angles to the longitudinal direction L. A thickness of the fin 403A, 403B is defined as the distance between the first face and the second face (along the longitudinal direction L).

The structure comprises a plurality of channels 5 for the passage of a cooling fluid; each channel 5 is interposed between a respective first element 400A and a respective second element 400B.

The first face of the fin 403A, 403B of each first or second element 400A, 400B is facing towards the second face of the fin 403A, 403B of the respective first or second element 400A, 400B before it and is spaced from it to laterally define a respective channel 5 of the plurality of channels 5. The second face of the fin 403A, 403B of each first or second element 400A, 400B is facing towards the first face of the fin 403A, 403B of the respective first or second element 400A, 400B after it and is spaced from it to laterally define a respective channel 5 of the plurality of channels 5.

In this way the fins 403A, 403B, brushed against by the cooling fluid, maintain a temperature gradient between the bases 401A, 401B and the tops 402A, 402B of the first and second elements 400A, 400B.

In one embodiment, the tops 402A, 402B of the first elements 400A and of the second elements 400B have a thickness 's' (defined along the longitudinal direction L) greater than the thickness 's' of the fins 403A, 403B, so that they project onto respective channels 5 of the plurality of channels 5, in order to be brushed against and cooled by the cooling fluid. In one embodiment, the bases 401A, 401B of the first elements 400A and of the second elements 400B have a thickness (defined along the longitudinal direction L) greater than the thickness 's' of the fins 403A, 403B, so that they project onto respective channels 5 of the plurality of channels 5, in order to be brushed against and cooled by the cooling fluid. Therefore, each channel is defined by the surfaces of: a base 401A, a fin 403A, a top 402A of a first element 400A and a base 401B, a fin 403B and a top 403B of a second element 400B.

In one embodiment, a distance 'd' between the base 401A, 401B and the top 402A, 402B of each element 400A, 400B (equal to the length of the fin 403A, 403B) is significantly greater than the thickness 's' of the fin 403A, 403B; for example, 20 times greater.

This description also provides a method for making an apparatus 1 for supporting and cooling a photovoltaic panel 10.

The method comprises a step of providing a baseplate 2 and a top plate 3. The method comprises a step of fastening the baseplate 2 to a frame 6. The method comprises a step of providing a first element 400A (preferably, of a plurality of first elements 400A) which is/are made of an electrically conductive first material, having a first value of Seebeck coefficient.

The method comprises a step of providing a second element 400B (preferably, of a plurality of second elements 400B) which is/are made of an electrically conductive second material, having a second value of Seebeck coefficient.

Each first element 400A and each second element 400B includes a base 401A, 401B, a top 402A, 402B and a fin 403A, 403B elongated between the base 401A, 401B and the top 402A, 402B.

In one embodiment, the method comprises a step of housing the first elements and the second elements 400A, 400B on the baseplate 2.

The housing operation comprises disposing the first elements 400A and 400B of the pluralities in sequence, from an end first element to an end second element, so as to form a row 4 (or a plurality of rows 4). Each element 400A, 400B of the row 4 is adjacent to the respective element before it and to the respective element after it. In the row 4, the first elements 400A are disposed alternating with the second elements 400B, so that for each first element 400A the respective element before it and the respective element after it are second elements 400B, and vice versa.

The method comprises a step of connecting the base 401B of each second element 400B to the base 401A of the respective first element 401A before it. The method comprises a step of connecting the top 402B of each second element 400B to the top 402A of the first element 401 after it.

In one embodiment, the steps of connecting are performed by means of vertical slotting joints 44 using pressure. In this embodiment, the step of connecting comprises moving the first elements 400A and/or the second elements 400B along a vertical direction V.

In one embodiment, the steps of connecting are performed by means of longitudinal slotting joints 43 using pressure. In this embodiment, the step of connecting comprises moving the first elements 400A and/or the second elements 400B along the longitudinal direction L.

The method comprises a step of housing the top plate 3 on the tops 402A, 402B of the first elements 400A and/or of the second elements 400B. The method comprises a step of fastening the top plate 3 to the frame. In this way, the tops 402A, 402B of the first elements 400A and/or of the second elements 400B are placed in heat exchange conditions with the top plate 3, in order to be able to remove heat from the top plate. Vice versa, preferably, the bases 401A, 401B of the first elements 400A and/or of the second elements 400B are disposed in heat exchange conditions with the baseplate 2.

In the step of housing, the fin 403A, 403B of each first element 400A and/or second element 400B is housed spaced from the fin 403A, 403B of the respective element 400A, 400B before it and the fin 403A, 403B of the respective element 400A, 400B after it, in order to define a plurality of channels 5 for a cooling fluid. The channels 5 of the plurality of channels 5 are configured to allow a cooling fluid to brush against the fins 403A, 403B of the first elements 400A and/or of the second elements 400B, maintaining a temperature gradient between the bases 401A, 401B and the tops 402A, 402B.

## Claims

1. An apparatus (1) for supporting and cooling a photovoltaic panel (10) adapted to generate a primary electric current, the apparatus (1) comprising:
- a baseplate (2) configured to be mounted on a roof (20) or on the ground;
- a top plate (3), the photovoltaic panel (10) being operatively rested on the top plate (3);
- a structure configured to generate a supplementary electric current (I) by Seebeck effect, where the structure is interposed between the baseplate (2) and the top plate (3), to exchange heat with the photovoltaic panel (10) through the top plate (3), and includes a first element (400A) made of a first material, the first material being electrically conductive and having a first value of Seebeck coefficient, and a second element (400B) made of a second material, the second material being electrically conductive and having a second value of Seebeck coefficient, different from the first value, where the first and second elements (400A, 400B) are electrically connected to each other to allow the supplementary electric current (I) to flow therethrough,
**characterized in that** the first and the second element (400A, 400B) of the structure include surfaces that delimit a channel (5) for the passage of a cooling fluid, so that the structure constitutes a heat exchanger configured to dissipate heat extracted from the photovoltaic panel (10).

2. The apparatus (1) according to claim 1, wherein the first and the second element (400A, 400B) are in heat exchange conditions with the baseplate (2).

3. The supporting and cooling apparatus (1) according to claim 2, wherein the first and the second element (400A, 400B) each include a base (401A, 401B), a top (402A, 402B) and a fin (403A, 403B) elongated between the base (401A, 401B) and the top (402A, 402B).

4. The supporting and cooling apparatus (1) according to claim 3, wherein the base (401A) of the first element (400A) is in contact with the baseplate (2) and the top (402B) of the second element (400B) is in contact with the top plate (3).

5. The apparatus (1) according to claim 3 or 4, wherein a distance (d) between the base (401A, 401B) and the top (402A, 402B) of each first and second element (400A, 400B) is at least 20 times greater than a thickness (s) of the fin (403A, 403B).

6. The apparatus (1) according to any one of claims 3 to 5, wherein the base (401A) of the first element (400A) is connected to the base (401B) of the second element (400B) and the top (402A) of the first element (400A) is electrically isolated from the top of the second element (400B) so as to allow the supplementary electric current (I) to flow from the first element (400A) to the second element (400B) and vice versa.

7. The apparatus (1) according to any one of claims 3 to 6, wherein the fin (403A) of the first element (400A) is spaced from the fin (403B) of the second element (400B), wherein the channel (5) for the passage of the cooling fluid is partly delimited by a first surface of the fin (403A) of the first element (400A), the first surface facing towards the fin (403B) of the second element (400B), and by a second surface of the fin (403B) of the second element (400B), the second surface facing towards the fin (403A) of the first element (400A), and wherein the channel (5) for the passage of the cooling fluid is partly delimited by the top (402A) of the first element (400A) and/or by the top (402B) of the second element (400B).

8. The apparatus (1) according to any one of claims 3 to 7, comprising a plurality of first elements (400A) and a plurality of second elements (400B), disposed in succession in a row (4), wherein the first elements (400A) of the plurality of first elements (400A) in the row (4) are alternated with second elements (400B) of the plurality of second elements (400B), so that each first element (400A) of the plurality of first elements (400A) is adjacent to the respective second element (400B) before it and to the respective second element (400B) after it.

9. The apparatus (1) according to claim 8, wherein, on each first element (400A) of the plurality of first elements (400A), the top (402A) is connected to the top (402B) of the second element (400B) before it and the base (401A) is connected to the base (401B) of the second element (400B) after it.

10. The apparatus (1) according to any one of the preceding claims,
wherein the first material includes a first polymer and the second material includes a second polymer, or
wherein the apparatus (1) comprises a circulator configured to force the cooling fluid to circulate in the channel (5).

11. A photovoltaic plant comprising a photovoltaic panel (10) and an apparatus (1) according to one or more of the preceding claims.

12. A method for making an apparatus (1) for supporting and cooling a photovoltaic panel (10), comprising the following steps:
- providing a baseplate (2);
- providing a top plate (3);
- providing a first element (400A) made of a first material, the first material being electrically conductive and having a first value of Seebeck coefficient, and a second element (400B) made of a second material, the second material being electrically conductive and having a second value of Seebeck coefficient, different from the first value,
- housing the first element (400A) and the second element (400B) between the baseplate (2) and the top plate (3) in order to remove heat from the top plate (3), and connecting the first element (400A) to the second element (400B) in order to allow the supplementary electric current (I) to flow therethrough,
**characterized in that** the first element (400A) and the second element (400B) of the structure include surfaces which, in the step of housing, are placed apart from one another to delimit a channel (5) for the passage of a cooling fluid, so that the structure constitutes a heat exchanger configured to dissipate heat extracted from the photovoltaic panel (10).

13. The method according to claim 12, wherein the first and the second element (400A, 400B) each include a base (401A, 401B), a top (402A, 402B) and an elongate fin (403A, 403B) between the base (401A, 401B) and the top (402A, 402B),
wherein the step of housing and connecting comprises the following sub-steps, in succession:
- fastening the baseplate (2) to a frame (6);
- resting the base (401A) of the first element (400A) in contact with the baseplate (2);
- slotting the base (401B) of the second element (400B) into the base (402A) of the first element (400A) and the top (402B) of the second element (400B) into the top (402A) of the first element (400A), wherein the step of slotting comprises moving the second element (400B) in a direction at right angles to the baseplate (2);
- resting the top plate (3) in contact with the top (402B) of the second element (400B);
- fastening the top plate (3) to the frame (6).

14. The method according to claim 12, wherein the first and the second element (400A, 400B) each include a base (401A, 401B), a top (402A, 402B) and an elongate fin (403A, 403B) between the base (401A, 401B) and the top (402A, 402B),
wherein the step of housing and connecting comprises the following sub-steps, in succession:
- fastening the baseplate (2) to a frame (6);
- resting the base (401A) of the first element (400A) in contact with the baseplate (2);
- resting the base (401B) of the second element (400B) in contact with the baseplate (2);
- slotting the base (401A) of the first element (400A) into the base (401B) of the second element (400B), wherein the step of slotting comprises moving the second element (400B) in a direction parallel to the baseplate (2);
- resting the top plate (3) in contact with the top (402A) of the first element (400A) and with the top (402B) of the second element (400B).

15. A method for installing a supporting and cooling apparatus (1) on an existing photovoltaic panel (10), the method comprising the following steps:
- providing the apparatus (1), where the apparatus (1) comprises: a baseplate (2), a top plate (3), a structure configured to generate a supplementary electric current (I) by Seebeck effect, where the structure is interposed between the baseplate (2) and the top plate (3), to exchange heat with the photovoltaic panel (10) through the top plate (3), and includes a first element (400A) made of a first material, the first material being electrically conductive and having a first value of Seebeck coefficient, and a second element (400B) made of a second material, the second material being electrically conductive and having a second value of Seebeck coefficient, different from the first value, where the first and second elements (400A, 400B) are electrically connected to each other to allow the supplementary electric current (I) to flow therethrough, wherein the first and the second element (400A, 400B) of the structure include surfaces that delimit a channel (5) for the passage of a cooling fluid, so that the structure constitutes a heat exchanger configured to dissipate heat extracted from the photovoltaic panel (10);
- mounting and connecting the baseplate (2) on a roof (20) or on the ground;
- mounting and connecting the photovoltaic panel (10) on the top plate (3).

## Patentansprüche

1. Vorrichtung (1) zum Stützen und Kühlen eines Fotovoltaikpaneels (10), das angepasst ist, um einen primären elektrischen Strom zu erzeugen, wobei die Vorrichtung (1) Folgendes umfasst:
- eine Basisplatte (2), die dazu ausgelegt ist, auf einem Dach (20) oder auf dem Boden montiert zu werden;
- eine Deckplatte (3), wobei das Fotovoltaikpaneel (10) funktional auf der Deckplatte (3) ruht;
- eine Struktur, die ausgelegt ist, um einen zusätzlichen elektrischen Strom (I) durch den Seebeck-Effekt zu erzeugen, wobei die Struktur zwischen der Basisplatte (2) und der Deckplatte (3) angeordnet ist, um Wärme mit dem Fotovoltaikpaneel (10) durch die Deckplatte (3) auszutauschen, und ein erstes Element (400A), das aus einem ersten Material hergestellt ist, wobei das erste Material elektrisch leitfähig ist und einen ersten Wert des Seebeck-Koeffizienten aufweist, und ein zweites Element (400B), das aus einem zweiten Material hergestellt ist, wobei das zweite Material elektrisch leitfähig ist und einen zweiten Wert des Seebeck-Koeffizienten aufweist, der sich vom ersten Wert unterscheidet, beinhaltet, wobei das erste und das zweite Element (400A, 400B) elektrisch miteinander verbunden sind, um zu ermöglichen, dass der zusätzliche elektrische Strom (I) durch sie fließt,
**dadurch gekennzeichnet, dass** das erste und das zweite Element (400A, 400B) der Struktur Oberflächen beinhalten, die einen Kanal (5) für den Durchgang eines Kühlfluids begrenzen, sodass die Struktur einen Wärmetauscher bildet, der ausgelegt ist, um vom Fotovoltaikpaneel (10) abgezogene Wärme abzuführen.

2. Vorrichtung (1) nach Anspruch 1, wobei sich das erste und das zweite Element (400A, 400B) unter Wärmeaustauschbedingungen mit der Basisplatte (2) befinden.

3. Stütz- und Kühlvorrichtung (1) nach Anspruch 2, wobei das erste und das zweite Element (400A, 400B) jeweils eine Basis (401A, 401B), eine Oberseite (402A, 402B) und eine Rippe (403A, 403B) beinhalten, die sich zwischen der Basis (401A, 401B) und der Oberseite (402A, 402B) erstreckt.

4. Stütz- und Kühlvorrichtung (1) nach Anspruch 3, wobei die Basis (401A) des ersten Elements (400A) in Kontakt mit der Basisplatte (2) ist und die Oberseite (402B) des zweiten Elements (400B) in Kontakt mit der Deckplatte (3) ist.

5. Vorrichtung (1) nach Anspruch 3 oder 4, wobei ein Abstand (d) zwischen der Basis (401A, 401B) und der Oberseite (402A, 402B) eines jeden ersten und zweiten Elements (400A, 400B) mindestens 20-mal größer ist als eine Dicke (s) der Rippe (403A, 403B).

6. Vorrichtung (1) nach einem der Ansprüche 3 bis 5, wobei die Basis (401A) des ersten Elements (400A) mit der Basis (401B) des zweiten Elements (400B) verbunden ist und die Oberseite (402A) des ersten Elements (400A) von der Oberseite des zweiten Elements (400B) elektrisch isoliert ist, so dass der zusätzliche elektrische Strom (I) von dem ersten Element (400A) zum zweiten Element (400B) und umgekehrt fließen kann.

7. Vorrichtung (1) nach einem der Ansprüche 3 bis 6, wobei die Rippe (403A) des ersten Elements (400A) von der Rippe (403B) des zweiten Elements (400B) beabstandet ist, wobei der Kanal (5) für den Durchgang des Kühlfluids teilweise durch eine erste Oberfläche der Rippe (403A) des ersten Elements (400A), wobei die erste Oberfläche der Rippe (403B) des zweiten Elements (400B) zugewandt ist, und durch eine zweite Oberfläche der Rippe (403B) des zweiten Elements (400B), wobei die zweite Oberfläche der Rippe (403A) des ersten Elements (400A) zugewandt ist, begrenzt ist, und wobei der Kanal (5) für den Durchgang des Kühlfluids teilweise durch die Oberseite (402A) des ersten Elements (400A) und/oder durch die Oberseite (402B) des zweiten Elements (400B) begrenzt ist.

8. Vorrichtung (1) nach einem der Ansprüche 3 bis 7, umfassend eine Vielzahl von ersten Elementen (400A) und eine Vielzahl von zweiten Elementen (400B), die in einer Reihe (4) nacheinander angeordnet sind, wobei die ersten Elemente (400A) der Vielzahl von ersten Elementen (400A) in der Reihe (4) mit zweiten Elementen (400B) der Vielzahl von zweiten Elementen (400B) abwechseln, so dass ein jedes erste Element (400A) der Vielzahl von ersten Elementen (400A) an das jeweilige zweite Element (400B) vor diesem und an das jeweilige zweite Element (400B) nach diesem angrenzt.

9. Vorrichtung (1) nach Anspruch 8, wobei an einem jeden ersten Element (400A) der Vielzahl von ersten Elementen (400A) die Oberseite (402A) mit der Oberseite (402B) des zweiten Elements (400B) vor diesem verbunden ist und die Basis (401A) mit der Basis (401B) des zweiten Elements (400B) nach diesem verbunden ist.

10. Vorrichtung (1) nach einem der vorhergehenden Ansprüche, wobei das erste Material ein erstes Polymer beinhaltet und das zweite Material ein zweites Polymer beinhaltet, oder
wobei die Vorrichtung (1) einen Zirkulator umfasst, der ausgelegt ist, um das Kühlfluid zu zwingen, im Kanal (5) zu zirkulieren.

11. Fotovoltaikanlage, umfassend ein Fotovoltaikpaneel (10) und eine Vorrichtung (1) nach einem oder mehreren der vorhergehenden Ansprüche.

12. Verfahren zum Herstellen einer Vorrichtung (1) zum Stützen und Kühlen eines Fotovoltaikpaneels (10), umfassend die folgenden Schritte:
- Bereitstellen einer Basisplatte (2);
- Bereitstellen einer Deckplatte (3);
- Bereitstellen eines ersten Elements (400A), das aus einem ersten Material hergestellt ist, wobei das erste Material elektrisch leitfähig ist und einen ersten Wert des Seebeck-Koeffizienten aufweist, und eines zweiten Elements (400B), das aus einem zweiten Material hergestellt ist, wobei das zweite Material elektrisch leitfähig ist und einen zweiten Wert des Seebeck-Koeffizienten aufweist, der sich vom ersten Wert unterscheidet,
- Unterbringen des ersten Elements (400A) und des zweiten Elements (400B) zwischen der Basisplatte (2) und der Deckplatte (3), um Wärme von der Deckplatte (3) zu entfernen, und Verbinden des ersten Elements (400A) mit dem zweiten Element (400B), um zu ermöglichen, dass der zusätzliche elektrische Strom (I) durch diese fließt, **dadurch gekennzeichnet, dass** das erste Element (400A) und das zweite Element (400B) der Struktur Oberflächen beinhalten, die im Schritt zum Unterbringen voneinander beabstandet angeordnet sind, um einen Kanal (5) für den Durchgang eines Kühlfluids zu begrenzen, so dass die Struktur einen Wärmetauscher bildet, der ausgelegt ist, um vom Fotovoltaikpaneel (10) abgezogene Wärme abzuführen.

13. Verfahren nach Anspruch 12, wobei das erste und das zweite Element (400A, 400B) jeweils eine Basis (401A, 401B), eine Oberseite (402A, 402B) und eine längliche Rippe (403A, 403B) zwischen der Basis (401A, 401B) und der Oberseite (402A, 402B) beinhalten,
wobei der Schritt zum Unterbringen und Verbinden die folgenden Unterschritte nacheinander umfasst:
- Befestigen der Basisplatte (2) an einem Rahmen (6);
- Auflegen der Basis (401A) des ersten Elements (400A) in Kontakt mit der Basisplatte (2);
- Einfügen der Basis (401B) des zweiten Elements (400B) in die Basis (402A) des ersten Elements (400A) und der Oberseite (402B) des zweiten Elements (400B) in die Oberseite (402A) des ersten Elements (400A), wobei der Schritt zum Einfügen das Bewegen des zweiten Elements (400B) in einer Richtung rechtwinklig zur Basisplatte (2) umfasst;
- Auflegen der Deckplatte (3) in Kontakt mit der Oberseite (402B) des zweiten Elements (400B);
- Befestigen der Deckplatte (3) am Rahmen (6).

14. Verfahren nach Anspruch 12, wobei das erste und das zweite Element (400A, 400B) jeweils eine Basis (401A, 401B), eine Oberseite (402A, 402B) und eine längliche Rippe (403A, 403B) zwischen der Basis (401A, 401B) und der Oberseite (402A, 402B) beinhalten,
wobei der Schritt zum Unterbringen und Verbinden die folgenden Unterschritte nacheinander umfasst:
- Befestigen der Basisplatte (2) an einem Rahmen (6);
- Auflegen der Basis (401A) des ersten Elements (400A) in Kontakt mit der Basisplatte (2);
- Auflegen der Basis (401B) des zweiten Elements (400B) in Kontakt mit der Basisplatte (2);
- Einfügen der Basis (401A) des ersten Elements (400A) in die Basis (401B) des zweiten Elements (400B), wobei der Schritt zum Einfügen das Bewegen des zweiten Elements (400B) in einer Richtung parallel zur Basisplatte (2) umfasst;
- Auflegen der Deckplatte (3) in Kontakt mit der Oberseite (402A) des ersten Elements (400A) und mit der Oberseite (402B) des zweiten Elements (400B).

15. Verfahren zum Installieren einer Stütz- und Kühlvorrichtung (1) auf einem vorhandenen Fotovoltaikpaneel (10), wobei das Verfahren die folgenden Schritte umfasst:
- Bereitstellen der Vorrichtung (1), wobei die Vorrichtung (1) umfasst: eine Basisplatte (2), eine Deckplatte (3), eine Struktur, die ausgelegt ist, um einen zusätzlichen elektrischen Strom (I) durch den Seebeck-Effekt zu erzeugen, wobei die Struktur zwischen der Basisplatte (2) und der Deckplatte (3) angeordnet ist, um Wärme mit dem Fotovoltaikpaneel (10) durch die Deckplatte (3) auszutauschen, und ein erstes Element (400A), das aus einem ersten Material hergestellt ist, wobei das erste Material elektrisch leitfähig ist und einen ersten Wert des Seebeck-Koeffizienten aufweist, und ein zweites Element (400B), das aus einem zweiten Material hergestellt ist, wobei das zweite Material elektrisch leitfähig ist und einen zweiten Wert des Seebeck-Koeffizienten aufweist, der sich vom ersten Wert unterscheidet, beinhaltet, wobei das erste und das zweite Element (400A, 400B) elektrisch miteinander verbunden sind, um zu ermöglichen, dass der zusätzliche elektrische Strom (I) durch sie fließt, wobei das erste und das zweite Element (400A, 400B) der Struktur Oberflächen beinhalten, die einen Kanal (5) für den Durchgang eines Kühlfluids begrenzen, sodass die Struktur einen Wärmetauscher bildet, der ausgelegt ist, um vom Fotovoltaikpaneel (10) abgezogene Wärme abzuführen;
- Montieren und Verbinden der Basisplatte (2) auf einem Dach (20) oder auf dem Boden;
- Montieren und Verbinden des Fotovoltaikpaneels (10) auf der Deckplatte (3).

## Revendications

1. Appareil (1) de support et de refroidissement d'un panneau photovoltaïque (10) adapté pour générer un courant électrique primaire, l'appareil (1) comprenant :
- une plaque de base (2) configurée pour être montée sur un toit (20) ou sur le sol ;
- une plaque supérieure (3), le panneau photovoltaïque (10) reposant de manière fonctionnelle sur la plaque supérieure (3) ;
- une structure configurée pour générer un courant électrique (I) supplémentaire par effet Seebeck, où la structure est interposée entre la plaque de base (2) et la plaque supérieure (3) pour échanger de la chaleur avec le panneau photovoltaïque (10) à travers la plaque supérieure (3), et inclut un premier élément (400A) constitué d'un premier matériau, le premier matériau étant électriquement conducteur et ayant une première valeur de coefficient Seebeck, et un deuxième élément (400B) constitué d'un deuxième matériau, le deuxième matériau étant électriquement conducteur et ayant une deuxième valeur de coefficient Seebeck, différente de la première valeur, où les premier et deuxième éléments (400A, 400B) sont électriquement connectés l'un à l'autre pour permettre au courant électrique (I) supplémentaire de circuler à travers eux,
**caractérisé en ce que** le premier et le deuxième élément (400A, 400B) de la structure comprennent des surfaces qui délimitent un canal (5) pour le passage d'un fluide de refroidissement, de sorte que la structure constitue un échangeur de chaleur configuré pour dissiper la chaleur extraite du panneau photovoltaïque (10).

2. Dispositif (1) selon la revendication 1, dans lequel le premier et le deuxième élément (400A, 400B) sont en conditions d'échange thermique avec la plaque de base (2) .

3. Appareil de support et de refroidissement (1) selon la revendication 2, dans lequel le premier et le deuxième élément (400A, 400B) comprennent chacun une base (401A, 401B), un sommet (402A, 402B) et une ailette (403A, 403B) allongée entre la base (401A, 401B) et le sommet (402A, 402B) .

4. Appareil de support et de refroidissement (1) selon la revendication 3, dans lequel la base (401A) du premier élément (400A) est en contact avec la plaque de base (2) et le sommet (402B) du deuxième élément (400B) est en contact avec la plaque supérieure (3).

5. Appareil (1) selon la revendication 3 ou 4, dans lequel une distance (d) entre la base (401A, 401B) et le sommet (402A, 402B) de chaque premier et deuxième élément (400A, 400B) est au moins 20 fois supérieure à une épaisseur (s) de l'ailette (403A, 403B).

6. Appareil (1) selon l'une quelconque des revendications 3 à 5, dans lequel la base (401A) du premier élément (400A) est relié à la base (401B) du deuxième élément (400B) et le sommet (402A) du premier élément (400A) est isolé électriquement du sommet du deuxième élément (400B) de manière à permettre au courant électrique (I) supplémentaire de circuler du premier élément (400A) vers le deuxième élément (400B) et vice versa.

7. Dispositif (1) selon l'une quelconque des revendications 3 à 6, dans lequel l'ailette (403A) du premier élément (400A) est espacée de l'ailette (403B) du deuxième élément (400B), dans lequel le canal (5) de passage du fluide de refroidissement est partiellement délimité par une première surface de l'ailette (403A) du premier élément (400A), la première surface étant tournée vers l'ailette (403B) du deuxième élément (400B), et par une deuxième surface de l'ailette (403B) du deuxième élément (400B), la deuxième surface étant tournée vers l'ailette (403A) du premier élément (400A), et dans lequel le canal (5) de passage du fluide de refroidissement est partiellement délimité par le sommet (402A) du premier élément (400A) et/ou par le sommet (402B) du deuxième élément (400B).

8. Appareil (1) selon l'une quelconque des revendications 3 à 7, comprenant une pluralité de premiers éléments (400A) et une pluralité de deuxièmes éléments (400B) disposés successivement dans une rangée (4), dans lequel les premiers éléments (400A) de la pluralité de premiers éléments (400A) dans la rangée (4) sont alternés avec les deuxièmes éléments (400B) de la pluralité de deuxièmes éléments (400B), de sorte que chaque premier élément (400A) de la pluralité de premiers éléments (400A) est adjacent au deuxième élément respectif (400B) le précédant et au deuxième élément (400B) respectif lui succédant.

9. Appareil (1) selon la revendication 8, dans lequel, sur chaque premier élément (400A) de la pluralité de premiers éléments (400A), le sommet (402A) est relié au sommet (402B) du deuxième élément (400B) le précédant et la base (401A) est reliée à la base (401B) du deuxième élément (400B) lui succédant.

10. Appareil (1) selon l'une quelconque des revendications précédentes, dans lequel le premier matériau inclut un premier polymère et le deuxième matériau inclut un deuxième polymère, ou
dans lequel l'appareil (1) comprend un circulateur configuré pour forcer le fluide de refroidissement à circuler dans le canal (5).

11. Installation photovoltaïque comprenant un panneau photovoltaïque (10) et un appareil (1) selon une ou plusieurs des revendications précédentes.

12. Procédé de fabrication d'un appareil (1) de support et de refroidissement d'un panneau photovoltaïque (10), comprenant les étapes suivantes :
- prévoir une plaque de base (2) ;
- prévoir une plaque supérieure (3) ;
- prévoir un premier élément (400A) constitué d'un premier matériau, le premier matériau étant électriquement conducteur et ayant une première valeur de coefficient Seebeck, et un deuxième élément (400B) constitué d'un deuxième matériau, le deuxième matériau étant électriquement conducteur et ayant une seconde valeur de coefficient Seebeck, différente de la première valeur,
- loger le premier élément (400A) et le deuxième élément (400B) entre la plaque de base (2) et la plaque supérieure (3) afin d'éliminer la chaleur de la plaque supérieure (3), et connecter le premier élément (400A) au deuxième élément (400B) afin de permettre au courant électrique (I) supplémentaire de circuler à travers celui-ci,
**caractérisé en ce que** le premier élément (400A) et le deuxième élément (400B) de la structure comprennent des surfaces qui, dans l'étape de logement, sont placées de façon espacée l'une de l'autre pour délimiter un canal (5) de passage d'un fluide de refroidissement, de sorte que la structure constitue un échangeur de chaleur configuré pour dissiper la chaleur extraite du panneau photovoltaïque (10).

13. Procédé selon la revendication 12, dans lequel le premier et le deuxième élément (400A, 400B) incluent chacun une base (401A, 401B), un sommet (402A, 402B) et une ailette allongée (403A, 403B) entre la base (401A, 401B) et le sommet (402A, 402B),
dans lequel l'étape de logement et de connexion comprend les sous-étapes suivantes successives :
- fixer la plaque de base (2) à un cadre (6) ;
- placer la base (401A) du premier élément (400A) en contact avec la plaque de base (2) ;
- encastrer la base (401B) du deuxième élément (400B) dans la base (402A) du premier élément (400A) et le sommet (402B) du deuxième élément (400B) dans le sommet (402A) du premier élément (400A), dans lequel l'étape d'encastrement comprend le déplacement du deuxième élément (400B) dans une direction à angle droit par rapport à la plaque de base (2) ;
- placer la plaque supérieure (3) en contact avec le sommet (402B) du deuxième élément (400B) ;
- fixer la plaque supérieure (3) au cadre (6).

14. Procédé selon la revendication 12, dans lequel le premier et le deuxième élément (400A, 400B) incluent chacun une base (401A, 401B), un sommet (402A, 402B) et une ailette allongée (403A, 403B) entre la base (401A, 401B) et le sommet (402A, 402B),
dans lequel l'étape de logement et de connexion comprend les sous-étapes suivantes successives :
- fixer la plaque de base (2) à un cadre (6) ;
- placer la base (401A) du premier élément (400A) en contact avec la plaque de base (2) ;
- placer la base (401B) du deuxième élément (400B) en contact avec la plaque de base (2) ;
- encastrer la base (401A) du premier élément (400A) dans la base (401B) du deuxième élément (400B), dans lequel l'étape d'encastrement comprend le déplacement du deuxième élément (400B) dans une direction parallèle à la plaque de base (2) ;
- placer la plaque supérieure (3) en contact avec le sommet (402A) du premier élément (400A) et avec le sommet (402B) du deuxième élément (400B).

15. Procédé d'installation d'un appareil de support et de refroidissement (1) sur un panneau photovoltaïque (10) existant, le procédé comprenant les étapes suivantes :
- prévoir l'appareil (1), où l'appareil (1) comprend : une plaque de base (2), une plaque supérieure (3), une structure configurée pour générer un courant électrique (I) supplémentaire par effet Seebeck, où la structure est interposée entre la plaque de base (2) et la plaque supérieure (3), pour échanger de la chaleur avec le panneau photovoltaïque (10) à travers la plaque supérieure (3), et inclut un premier élément (400A) constitué d'un premier matériau, le premier matériau étant électriquement conducteur et ayant une première valeur de coefficient Seebeck, et un deuxième élément (400B) constitué d'un second matériau, le second matériau étant électriquement conducteur et ayant une seconde valeur de coefficient Seebeck, différente de la première valeur, où les premier et deuxième éléments (400A, 400B) sont électriquement connectés l'un à l'autre pour permettre au courant électrique (I) supplémentaire de circuler à travers eux, dans lequel le premier et le deuxième élément (400A, 400B) de la structure comprennent des surfaces qui délimitent un canal (5) pour le passage d'un fluide de refroidissement, de sorte que la structure constitue un échangeur de chaleur configuré pour dissiper la chaleur extraite du panneau photovoltaïque (10) ;
- monter et raccorder la plaque de base (2) sur un toit (20) ou sur le sol ;
- monter et raccorder le panneau photovoltaïque (10) sur la plaque supérieure (3).
